# EUROPEAN PATENT SPECIFICATION

(11) **EP 0 574 074 B1**
(45) Date of publication and mention of the grant of the patent: **04.03.1998**
(21) Application number: 93201575.3
(22) Date of filing: 02.06.1993
(51) Int. Cl.: G11B 23/00, G11B 19/20, G11B 25/04

(54) **Data storage unit**
Datenspeichereinheit
Unité de stockage de données

(30) Priority: 09.06.1992 EP 92201654
(43) Date of publication of application: 15.12.1993
(73) Proprietor: Philips Electronics N.V., 5621 BA Eindhoven (NL)
(72) Inventor: Tielemans, Leonardus Petrus Maria, NL-5656 AA Eindhoven (NL); Kamerbeek, Evert Marius Hendrik, NL-5656 AA Eindhoven (NL)
(74) Representative: Schrijnemaekers, Hubert Joannes Maria

(56) References cited:
- DE-C- 4 140 379
- US-A- 4 623 952
- US-A- 4 717 977
- PATENT ABSTRACTS OF JAPAN vol. 4, no. 90 (P-017) 27 June 1980 & JP-A-55 052 556
- PATENT ABSTRACTS OF JAPAN vol. 11, no. 342 (P-635)(2789) 10 November 1987 & JP-A-62 124 671
- PATENT ABSTRACTS OF JAPAN vol. 8, no. 153 (P-287)(1590) 17 July 1984 & JP-A-59 052 455

## Description

The invention relates to a data storage unit as defined in the preamble of claim 1.

Such a data storage unit is known from US-A-4 717 977.

Such a unit is also known as a magnetic recording apparatus from JP-A 55-52556. The known apparatus has a bulky housing made up of a large number of parts, whose width increases in steps viewed from the top to the bottom. The housing accommodates an electric motor having an outgoing motor shaft carrying a magnetic recording disc extending underneath the motor. The long motor shaft has two ends supported in spherical bearings. A drawback of the known apparatus is its bulkiness, which is dictated mainly by the large axial dimension of the housing, as a result of which the apparatus is not suitable for use in many modern storage systems. Moreover, the known apparatus is difficult to miniaturise.

It is an object of the invention to provide a data storage unit of the type defined in the opening paragraph but having minimal dimensions.

The data storage unit in accordance with the invention is characterised in claim 1.

The data storage unit in accordance with the invention is a compact easy-to-handle cartridge, the limited space available in the housing being utilised to an optimum extent in a surprising manner. Preferably, the information disc extends in a plane intersecting the rotor of the drive unit. If the rotor axis coincides with the axis of rotation the information disc is preferably formed with a central opening through which the rotor of the drive unit extends, and the information disc is preferably secured to the rotor.

The size of the data storage unit in accordance with the invention is largely dictated by the diameter of the information disc accommodated in the housing. Particularly when a small information disc, for example of 3,12 cm (1.3 inch) diameter, is used the unit in the form of a cartridge can easily be secured to or in a data storage system, is easy to take along, and is easy to store.

The data storage unit in accordance with the invention is very suitable for recording data on the information disc with a high information density. Preferably, the information disc is constructed as a hard-magnetic disc on which information can be stored by means of the scanning unit, which comprises at least one magnetic head.

The data storage unit should comply with stringent requirements of mechanical accuracy, in particular as regards the manner in which the information-disc is supported. In order to enable information with an intertrack spacing of only a few micrometres to be written and/or read a highly accurate rotation of the information disc is required.

Irregular radial excursions (non-repeatable runouts) of the information disc of only a few nanometres and regular radial excursions (repeatable runouts) of the information disc of only a few nanometres are attainable with the embodiment of the unit in accordance with the invention which is characterised in that a dynamic spiral-groove bearing is arranged near each of the main walls, which bearing comprises a bearing member shaped as a segment of sphere and a bearing member shaped as a hollow segment of sphere, one of which bearing members has a groove pattern, one of the bearing members being stationary and being secured to a main wall and the other bearing member being rotatable and being connected to the rotor. In view of the desired bearing stiffness and load-bearing capacity the dynamic spiral-groove bearings are preferably of the hydrodynamic type.

Preferably, the above embodiment is also characterised in that at least one of the main walls has a compliant wall portion around the stationary bearing member, magnetic forces of the drive unit producing an axial preload on the spiral-groove bearing. This embodiment yields a tolerance-insensitive construction by the use of the high specific axial load-bearing capacity of the spherical spiral-groove bearings used in conjunction with the use of a local reduction of the flexural strength of one or both main walls in a direction parallel to the axis of rotation of the information disc. The radial bearing stiffness, which is important for the high accuracy of rotation of the information disc, depends upon the axial preload to a small extent only. A compliant wall portion can be obtained by a suitable choice of the material, for example aluminium, and the wall thickness of the main walls.

Another possibility is to provide radial grooves in a main wall around the stationary bearing section, so that this main wall becomes locally compliant in a direction parallel to the axis of rotation of the information disc, the required stiffness in a direction transverse to the axis of rotation being hardly influenced. A unit in accordance with the invention thus manufactured is characterised in that the electrical drive unit is an axial-field motor, the rotor having an axially magnetised multi-pole rotor magnet and means being provided for shielding the information disc from magnetic stray flux produced by the motor. In a practical embodiment said means the means comprise an annular soft-magnetic body extending between the rotor magnet and the information disc.

An embodiment of the data storage unit in accordance with the invention is characterised in that the main walls are made of a soft-magnetic material and form part of the stator of the axial-field motor, each of the main walls, at the side facing the rotor, carrying a set of energising coils for cooperation with the rotor magnet. In this way a very high degree of integration of the drive unit, the bearing means and the housing of a soft-magnetic material is achieved, resulting in a light-weight very compact data storage unit comprising a small number of parts. The energising coils can be manufactured separately and can be secured to the main walls by means of an adhesive. The coils can also be formed directly on the main walls, for example by means of lithography techniques. The presence of said radial grooves will mitigate the occurrence of eddy currents in the soft-magnetic material of the main walls.

An embodiment is characterised in that the stationary bearing parts are surrounded by energising coils.

An embodiment is characterised in that the rotatable bearing parts are secured to the rotor magnet.

The invention will now be described in more detail, by way of example, with reference to the drawings, in which:
Figure 1 is a sectional view showing a first embodiment of the data storage unit in accordance with the invention,
Figure 2 shows the unit of Fig. 1 in a sectional view taken on the line II-II,
Figure 3 shows the unit of Fig. 1 in a sectional view taken on the line III-III,
Figure 4 is a sectional view showing a part of a second embodiment of the data storage unit in accordance with the invention, and
Figure 5 is a sectional view showing a part of a third embodiment.

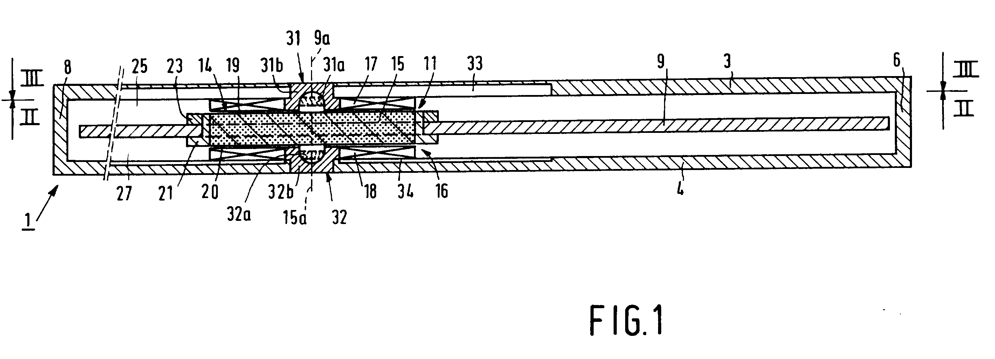

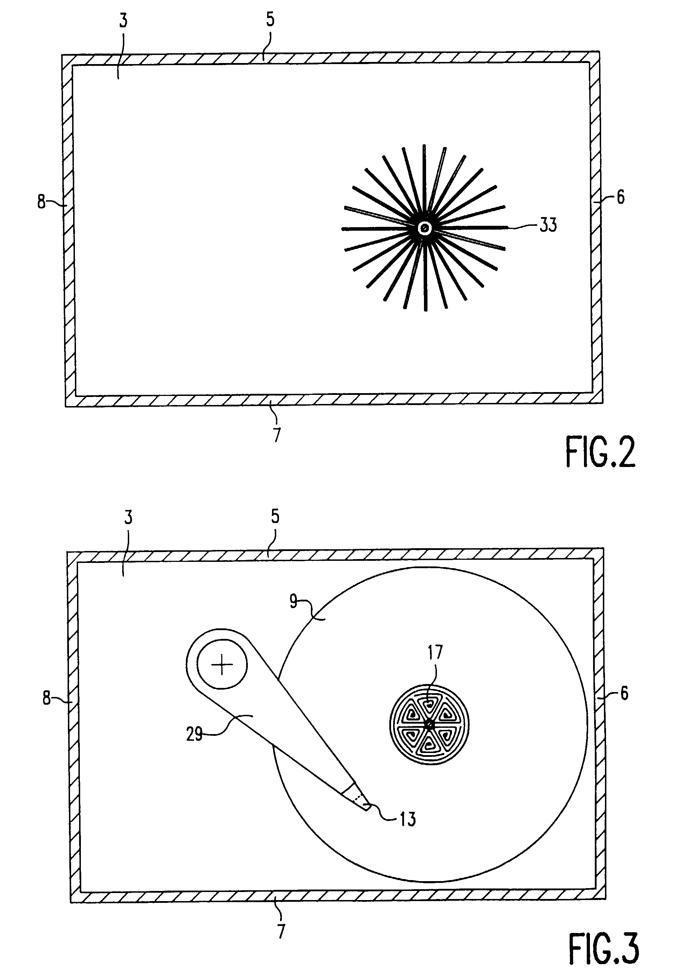

The data storage unit in accordance with the invention shown in Figs. 1, 2 and 3 comprises a housing 1 having two parallel main walls 3 and 4 and four side walls 5, 6, 7 and 8 interconnecting the main walls. The walls 3 to 8 are made of a soft-magnetic material, for example aluminium or an iron-silicon alloy. The housing 1 forms an at least substantially imperforate cartridge accommodating an information disc 9 which is rotatable about an axis of rotation 9a, an electrical drive unit 11 for rotating the information disc 9, and a scanning device for scanning the information disc 9. In the present example the housing has a length of 49 mm, a width of 34 mm and a height of 3.3 mm.

The drive unit 11 is constructed as an axial-field motor comprising a rotor 14 with a permanently magnetised multi-pole rotor magnet 15 and a stator 16 with two set of coils 17 and 18, the rotor magnet preferably being a high-energy magnet, for example of NiFeB. The rotor magnet 15, which is rotatable about a rotor axis 15a which coincides with the axis of rotation 9a, is axially magnetised and opposite each of the coil systems 17 and 18 it has magnetic poles, in the present case eight. The coil systems 17 and 18, which in the present example comprise six coils each, cooperate with the rotor magnet 15 *via* an air gap 19 or 20 and are arranged on the main walls 3 and 4 respectively.

In the present example the information disc 9 is a so-called magnetic hard disc of 1.3 inch, comprising a base carrying on one side or, as in the present example, on both sides a magnetic layer in which information has been stored or can be stored. The information disc, which has a central opening through which the rotor 14, in particular the rotor magnet 15, extends, is secured to the rotor 14. For this purpose an annular soft-magnetic body 21, for example made of iron, is arranged around the rotor magnet 15, on which body the information disc 9 is centred and is secured by means of a ring 23. The soft-magnetic body 21 also shields the information disc 9 from stray flux produced by the drive unit 11.

In the present example the scanning device comprises one scanning unit 13 on each side of the information disc 9. Each scanning unit 13, which is situated in a space 25 or 27 between the information disc 9 and one of the main walls 3 or 4, comprises a magnetic head, arranged on a pivotal arm 29, for writing and/or reading information.

The data storage unit comprises bearing means for supporting the rotor 14 and the information disc 9 secured to this rotor relative to the housing 1. The bearing means comprise two hydrodynamic spiral-groove bearings 31 and 32, each comprising a bearing member 31a and 32a respectively shaped as a segment of sphere, and a bearing member 31b and 32b respectively shaped as a hollow segment of sphere. The bearing members 31a and 32a, which each have a smooth bearing surface, are secured to the rotor 14, and the bearing members 31b and 32b, which each have a bearing surface formed with a groove pattern, are secured to the main walls 3 and 4 respectively. During rotation of the rotor 14 the groove patterns give rise to a pressure build-up in a medium, such as grease or oil, present between the bearing surfaces of the respective spiral-groove bearings.

In order to minimise tolerances the flexural strength of the bearing suspension in both main walls 3 and 4 is locally reduced. This is realised by providing the main walls 3 and 4 with a plurality of grooves 33 and 34, which extend radially from the bearings 31 and 32 respectively. The required axial preload on the bearing is provided by magnetic forces of the drive unit.

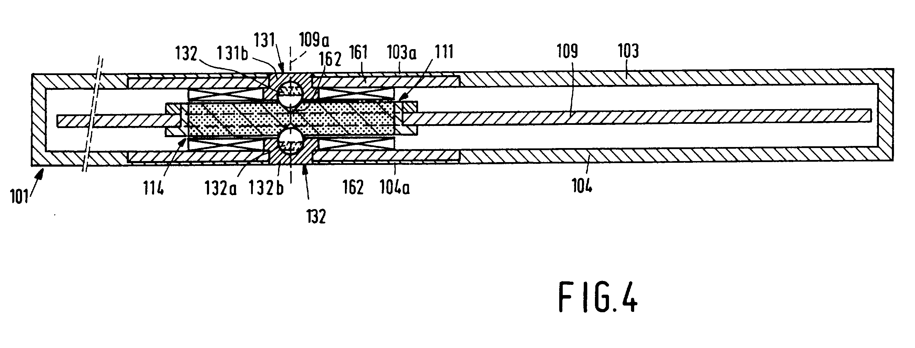

The embodiment shown in Fig. 4 bears much resemblance to the data storage unit shown in Figs. 1, 2 and 3. The unit comprises a magnetically non-conductive housing 101, for example made of aluminium, an information disc 109 which is centrically rotatable about an axis of rotation 109a, an electrical drive unit 111, two dynamic spiral-groove bearings 131 and 132, and a scanning unit, not shown, for cooperation with the information disc. The housing 101 has two plane-parallel main walls 103 and 104 oriented transversely of the axis of rotation 109a, which walls each have a contour at least similar to that of the information disc 1019. The housing 101, which takes the form of a cartridge, accommodates the information disc 109, the drive unit 111, and the scanning unit interposed between the information disc and one of the main walls. The cartridge comprises means for the mechanical and electrical connection to an external apparatus or system, such as for example a computer system. Around the bearings 131 and 132 the main walls 103 and 104 have thin wall portions 103a and 104a respectively for locally reducing the flexural strength.

In order to form a stator yoke for the drive unit 111 soft-magnetic plates 161 and 162 are provided at the location of the thin magnetically non-conductive wall portions 103a and 104a respectively.

The bearings 131 and 132 each have a bearing member 131a and 132a respectively shaped as a segment of sphere and, cooperating therewith, a bearing member 131b and 132b respectively shaped as a hollow segment of sphere. The bearing members 131b and 132b each have a pattern of grooves. The bearing members 131a and 132a, which each have a smooth bearing surface, form part of spherical bodies mounted in recesses 160 in a rotor 114 of the drive unit 111 and secured to the rotor by means of an adhesive 162.

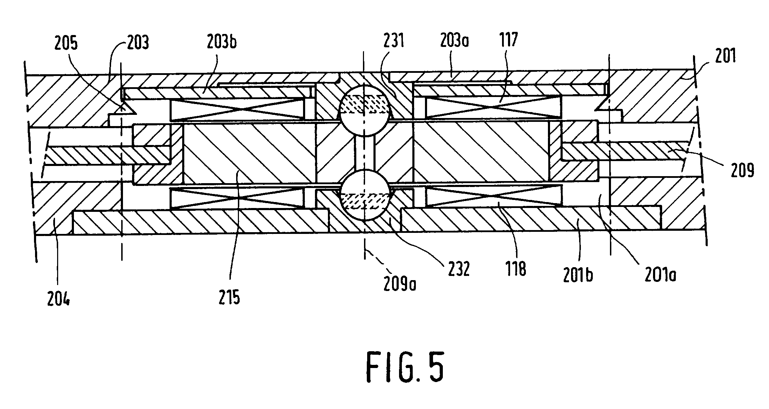

The embodiment shown in Fig. 5, which also bears much resemblance to the unit shown in Figs. 1, 2 and 3, comprises a housing 201 of a non-magnetic material, for example a reinforced plastics, having an opening 201a in which an end plate 201b of a soft-magnetic or ferromagnetic material is mounted. The housing 201 has two parallel main walls 203 and 204 oriented transversely of an axis of rotation 209a and each carrying a respective bearing 231 or 232. The bearing 231 is secured in a thin wall portion 203a of the main wall 203 and the bearing 232 is secured in the end plate 201b mounted in the main wall 204. The housing 201 accommodates an electrical drive unit comprising a rotor with a rotor magnet 215, an information disc 209, and drive coils. The drive coils include a set of coils 118 arranged on the end plate 201b and another set of coils 117 arranged on an end plate 203b mounted against the main wall 203. The end plate 203b can be secured by means of a folded joint 205. The bearing 232 forms a comparatively stiff assembly with the end plate 201b and the main wall 204. The bearing 231, which is isolated from the end plate 203b, is secured in the housing 201 in a comparatively flexible manner owing to the thin wall portion 203a, which functions as a diaphragm. This construction enables the bearings to be mechanically preloaded in a well-defined manner. Since the end plate 203b forms a comparatively stiff assembly with the main wall 203 the axial magnetic forces on the rotor cancel one another fully or almost fully, thereby ensuring optimum bearing in operation.

## Claims

1. A data storage unit comprising a housing (1, 101, 201), an information disc (9, 109, 209) of the hard disc type which is centrically rotatable about an axis of rotation (9a, 109a, 209a), an electrical motor (11, 111) for driving the information disc, which motor comprises a stator (16) and a rotor (14, 114) which is rotatable about a rotor axis, the rotor axis being oriented in the same direction as the axis of rotation, a bearing for supporting the information disc and the rotor relative to the housing, and a scanning unit (13) having a magnetic head for cooperation with the information disc, the housing comprising two plane-parallel main walls (3, 4; 103, 104; 203, 204) which are oriented transversely of said axis of rotation, which each have a contour at least substantially similar to that of the information disc, and which are interconnected by smaller side walls (5, 6, 7, 8), characterized in that the housing (1, 101, 201) constitutes a cartridge accommodating the information disc (9, 109, 209), the electrical motor (11, 111) and the scanning unit (13), the electrical motor being an electrical axial field motor, the information disc being disposed in a plane intersecting the rotor (14, 114) of said motor, and the scanning unit being situated between the information disc and one of the main walls (3, 4; 103, 104; 203, 204), the bearing comprising near each of the main walls a spiral groove bearing member ( 31, 32; 132, 132; 231, 232) having two bearing segments (31a, 31b; 32a, 32b; 131a, 131b; 132a, 132b), one of which bearing segments having a groove pattern, one of the bearing segments of each bearing members being stationary and being secured to a main wall and the other bearing segment of each bearing member being rotatable and being connected to the rotor.

2. A unit as claimed in Claim 1, characterised in that the information disc (9, 109, 209) extends in a plane intersecting the rotor 14, 114) of the axial field motor (11, 111).

3. A unit as claimed in Claim 1 or 2, characterized in that each of the main wall (3, 4; 103, 104; 203, 204), at a side facing the rotor (14, 114), carries a set of energizing coils (17, 18; 117, 118) for cooperation with the rotor.

4. A unit as claimed in Claim 1, 2 or 3, characterised in that one of the bearing segments of each bearing member (31, 32; 131, 132; 231, 232) is shaped as a segment of sphere and the other bearing segments of each bearing member is shaped as a hollow segment of sphere.

5. A unit as claimed in Claim 1, 2, 3 or 4, characterised in that at least one of the main walls has a compliant wall portion (103a, 104a; 203a, 204a) around the stationary bearing segment, magnetic forces of the electrical motor producing an axial preload on the bearing.

6. A unit as claimed in Claim 5, characterised in that the compliant wall portion has radially oriented grooves (33, 34).

7. A unit as claimed in any one of the Claims 1 to 6, characterized in that the rotor axis coincides with the axis of rotation, the information disc (9, 109, 209) being formed with a central opening through which the rotor (14, 114) of the electrical motor extends, the information disc being secured to the rotor.

8. A unit as claimed in anyone of the Claims 1 to 7, characterised in that the rotor (14, 114) of the axial-field motor has an axially magnetised multi-pole rotor magnet (15, 215), shielding means being provided for shielding the information disc from magnetic stray flux produced by the electrical motor.

9. A unit as claimed in any one of the Claims 8, characterised in that the shielding means comprise an annular soft-magnetic body (21) extending between the rotor magnet and the information disc.

10. A unit as claimed in any one of the Claims 1 to 9, characterised in that the main walls (3, 4; 103, 104; 203, 204) are made of a soft-magnetic material and form part of the stator (16) of the axial-field motor (11, 111).

11. A unit as claimed in any one of the Claims 1 to 10, characterised in that stationary bearing parts (31b, 32b; 131b, 132b) are surrounded by energising coils (17, 18; 117, 118).

## Patentansprüche

1. Datenspeichereinheit mit einem Gehäuse (1, 101, 201), einer Informationsscheibe (9, 109, 209) vom harten Speicherplattentyp, die zentrisch drehbar ist um eine Drehungsachse (9a, 109a, 209a), einem Elektromotor (11, 111) zum Antreiben der Informationsscheibe, wobei dieser Motor einen Ständer (16) und einen Läufer (14, 114) aufweist, der um eine Läuferachse drehbar ist, wobei diese Läuferachse sich in derselben Richtung erstreckt wie die Drehungsachse, einem Lager zum Unterstützen der Informationsscheibe und des Läufers gegenüber dem Gehäuse, und einer Abtasteinheit (13) mit einem Magnetkopf zum Zusammenarbeiten mit der Informationsscheibe, wobei das Gehäuse zwei planparallele Hauptwände (3, 4; 103, 104; 203, 204) aufweist, die sich quer zu der genannten Drehungsachse erstrecken, die je einen Umriß haben, der dem der Informationsscheibe im Wesentlichen entspricht und die durch kleinere Seitenwände (5, 6, 7, 8) miteinander verbunden sind, dadurch gekennzeichnet, daß das Gehäuse (1, 101, 201) eine Kassette bildet, welche die Informationsscheibe (9, 109, 209), den Elektromotor (11, 111) und die Abtasteinheit (13) enthält, wobei der Elektromotor ein elektrischer Axialfeldmotor ist, wobei die Informationsscheibe in einer Ebene vorgesehen ist, die den Läufer (14, 114) des Motors schneidet, und wobei die Abtasteinheit zwischen der Informationsscheibe und einer der Hauptwände (3, 4; 103, 104; 203, 204) vorgesehen ist, wobei die Lagerung in der Nähe jeder Hauptwand einen Spiralrillenlagerteil (31, 32; 131, 132, 231, 232) aufweist mit zwei Lagersegmenten 31a, 31b; 32a, 32b; 131a, 131b; 132a, 132b), wobei eines dieser Lagersegmente ein Rillenmuster aufweist, wobei eines der Lagersegmente jedes Lagerteils ortsfest und an einer Hauptwand befestigt und das andere Lagersegment jedes Lagerteils drehbar und mit dem Läufer verbunden ist.

2. Einheit nach Anspruch 1, dadurch gekennzeichnet, daß die Informationsscheibe (9, 109, 209) sich in einer Ebene erstreckt, die den Läufer (14, 114) des Axialfeldmotors (11, 111) schneidet.

3. Einheit nach Anspruch 1 oder 2, dadurch gekennzeichnet, daß jede der Hauptwände (3, 4; 103, 104; 203, 204) an einer Seite, die dem Läufer (14, 114) zugewandt ist, eine Satz Erregungsspulen (17, 18; 117, 118) zum Zusammenarbeiten mit dem Läufer trägt.

4. Einheit nach Anspruch 1, 2 oder 3, dadurch gekennzeichnet, daß eines der Lagersegmente jedes Lagerteils (31, 32; 131, 132; 231, 232) als Kugelsegment ausgebildet ist und das andere Lagersegment jedes Lagerelementes als Hohlkugelsegment ausgebildet ist.

5. Einheit nach Anspruch 1, 2, 3 oder 4, dadurch gekennzeichnet, daß wenigstens eine der Hauptwände einen gefalteten Wandteil (103a, 104a; 203a, 204a) um das ortsfeste Lagersegment aufweist, wobei Magnetkräfte des Elektromotors eine axiale Vorspannung am Lager erzeugen.

6. Einheit nach Anspruch 5, dadurch gekennzeichnet, daß der gefaltete Wandteil radial gerichtete Rillen (33, 34) hat.

7. Einheit nach einem der Ansprüche 1 bis 6, dadurch gekennzeichnet, daß die Läuferachse mit der Drehungsachse zusammenfällt, wobei die Infomationsscheibe (9, 109, 209) mit einer zentralen Öffnung versehen ist, durch die der Läufer (14, 114) des Elektromotors sich erstreckt, wobei die Informationsscheibe am Läufer befestigt ist.

8. Einheit nach einem der Ansprüche 1 bis 7, dadurch gekennzeichnet, daß der läufer (14, 114) des Axialfeldmotors einen axial magnetisierten Mehrpolläufermagneten (15, 215) aufweist, wobei Abschirmmittel vorgesehen sind zum Abschirmen der Informationsscheibe gegen vom Elektromotor erzeugten magnetischen Streufluß.

9. Einheit nach einem der Ansprüche 1 bis 8, dadurch gekennzeichnet, daß die Abschirmmittel einen ringförmigen weichmagnetischen Körper (21) haben, der sich zwischen dem Läufermagneten und der Informationsscheibe erstreckt.

10. Einheit nach einem der Ansprüche 1 bis 9, dadurch gekennzeichnet, daß die Hauptwände (3, 4; 103, 104; 203, 204) aus einem weichmagnetischen Material hergestellt sind und einen Teil des Ständers (16) des Axialfeldmotors (11, 111) bilden.

11. Einheit nach einem der Ansprüche 1 bis 10, dadurch gekennzeichnet, daß ortsfeste Lagerteile (31b, 32b; 131b, 132b) durch Erregungsspulen (17, 18; 117, 118) umgeben sind.

## Revendications

1. Unité de stockage de données comportant un boîtier (1, 101, 201), un disque d'information (9, 109, 209) du type de disque dur qui peut tourner centralement autour d'un axe de rotation (9a, 109a, 209a), un moteur électrique (11, 111) pour commander le disque d'information, ledit moteur comportant un stator (16) et un rotor (14, 114) qui peut tourner autour d'un axe de rotor, l'axe de rotor étant orienté dans la même direction que l'axe de rotation, un palier pour appuyer le disque d'information et le rotor par rapport au boîtier, et une unité de balayage (13) présentant une tête magnétique pour coopérer avec le disque d'information, le boîtier comportant deux parois principales plan-parallèles (3, 4; 103, 104; 203, 204) qui sont orientées transversalement audit axe de rotation, qui présentent chacune un contour au moins sensiblement similaire à celui du disque d'information et qui sont interconnectées par des parois latérales de plus faibles dimensions (5, 6, 7, 8), caractérisée en ce que le boîtier (1, 101, 201) constitue une cassette incorporant le disque d'information (9, 109, 209), le moteur électrique (11, 111) et l'unité de balayage (13), le moteur électrique étant un moteur de champ axial électrique, le disque d'information étant disposé dans un plan entrecoupant le rotor (14, 114) dudit moteur, et l'unité de balayage étant située entre le disque d'information et l'une des parois principales (3, 4; 103, 104; 203, 204), le palier comportant près de chacune des parois principales un élément d'appui à cannelures hélicoïdales (31, 32; 131, 132; 231, 232) présentant deux segments d'appui (31a, 31b; 32a, 32b; 131a, 131b; 132a, 132b), l'un des segments d'appui présentant une configuration de cannelures, l'un des segments d'appui de chaque élément d'appui étant stationnaire et étant fixé à une paroi principale et l'autre segment d'appui de chaque élément d'appui étant rotatif et étant relié au rotor.

2. Unité selon la revendication 1, caractérisée en ce que le disque d'information (9, 109, 209) s'étend dans un plan entrecoupant le rotor (14, 114) du moteur de champ axial (11, 111).

3. Unité selon la revendication 1 ou 2, caractérisée en ce que chacune des parois principales (3, 4; 103, 104; 203, 204), à un côté situé vis-à-vis du rotor (14, 114), présente un jeu de bobines d'excitation (17, 18; 117, 118) pour coopérer avec le rotor.

4. Unité selon la revendication 1, 2 ou 3, caractérisée en ce que l'un des segments d'appui de chaque élément d'appui (31, 32; 131, 132; 231, 232) est façonné comme un segment sphérique et en ce que l'autre segment d'appui de chaque élément d'appui est façonné comme un segment sphérique creux.

5. Unité selon la revendication 1, 2, 3 ou 4, caractérisée en ce qu'au moins l'une des parois principales présente autour du segment d'appui stationnaire une partie de paroi souple (103a, 104a; 203a, 204a), des forces magnétiques du moteur électrique engendrant une contrainte axiale sur le palier.

6. Unité selon la revendication 5, caractérisée en ce que la partie de paroi souple présente des cannelures radialement orientées (33, 34).

7. Unité selon l'une quelconque des revendications 1 à 6, caractérisée en ce que l'axe de rotor coïncide avec l'axe de rotation, le disque d'information (9, 109, 209) étant muni d'une ouverture centrale à travers laquelle s'étend le rotor (14, 114) du moteur électrique, le disque d'information étant fixé au rotor.

8. Unité selon l'une quelconque des revendications 1 à 7, caractérisée en ce que le rotor (14, 114) du moteur de champ axial présente un aimant de rotor multipolaire (15, 215) axialement magnétisé, des moyens de protection étant prévus pour protéger le disque d'information contre le flux de dispersion magnétique engendré par le moteur électrique.

9. Unité selon l'une quelconque des revendications 1 à 8, caractérisée en ce que les moyens de protection comportent un corps magnétique doux annulaire (21) s'étendant entre l'aimant de rotor et le disque d'information.

10. Unité selon l'une quelconque des revendications 1 à 9, caractérisée en ce que les parois principales (3, 4; 103, 104; 203, 204) sont fabriquées à partir d'un matériau magnétique doux et en ce qu'elles font partie du stator (16) du moteur de champ axial (11, 111).

11. Unité selon l'une quelconque des revendications 1 à 10, caractérisée en ce que des parties d'appui stationnaires (31b, 32b; 131b, 132b) sont entourées de bobines d'excitation (17, 18; 117, 118).
